# EUROPEAN PATENT SPECIFICATION

(11) **EP 3 336 639 B1**
(45) Date of publication and mention of the grant of the patent: **17.02.2021**
(21) Application number: 17205472.8
(22) Date of filing: 05.12.2017
(51) Int. Cl.: G05B 23/02, G06Q 10/00, G06Q 10/08

(54) **ASSET MANAGEMENT OF FIELD DEVICES**
FELDGERÄTEVERWALTUNG
LA GESTION DES ACTIFS DES DISPOSITIFS DE TERRAIN

(30) Priority: 09.12.2016 JP 2016239752
(43) Date of publication of application: 20.06.2018
(73) Proprietor: Yokogawa Electric Corporation, Tokyo 180-8750 (JP)
(72) Inventor: Yokochi, Yutaka, Tokyo, 180-8750 (JP)
(74) Representative: Henkel & Partner mbB

(56) References cited:
- EP-A1- 2 801 937
- WO-A2-03/075206
- US-A1- 2009 048 948
- US-A1- 2012 173 300

## Description

### BACKGROUND

### Technical Fields

The present invention relates to a device asset management apparatus, a device asset management method, a device asset management program, and a non-transitory computer readable storage medium.

### Related Art

In plants such as chemical industry plants or the like, a plant that manages and controls a well site of a gas field, an oil field, or the like and the surroundings thereof, a plant that manages and controls hydroelectric power generation, thermal power generation, and nuclear power generation, or the like, a plant that manages and controls environmental power generation such as solar power generation and wind power generation, or the like, a plant that manages and controls water supply and sewerage, a dam, or the like and factories (hereinafter, in a case in which these are collectively referred to, they will be referred to as "plants"), distributed control systems (DCS) have been constructed, and high-level automatic operations have been realized. In a DCS, field devices such as a measuring instrument, an operation device, and the like and a control apparatus controlling these are connected through a communicating means.

In a system or the like for a plant constructed to realize such an advanced automatic operation, maintenance of field devices is important for stable operation of the plant. A maintenance operator who maintains field devices checks the field devices periodically or non-periodically and replaces a defective field device. A device asset manager carries out asset management by managing an inventory of spare devices of field devices which are assets and supplying spare devices such that replacement of a field device is not hindered.

In maintenance of a field device, there is off-line maintenance in which the field device is detached from a plant and is subjected to tuning or checking. In the off-line maintenance, in order to enhance an operation rate of a plant, a field device to be checked is replaced with a substitutive device and the field device detached from the plant is subjected to checking or the like while the plant operates using the substitutive device. A field device that is confirmed to be healthy by the checking or the like is stored as a healthy device, but a field device that is confirmed to be unhealthy is discarded. A maintenance operator records results of the checking or the like in the maintenance as a maintenance record and reports the maintenance record to a device asset manager. The device asset manager confirms discard or the like of the field devices based on the maintenance record and performs asset management of the field devices.

A system that manages maintenance data at the time of failure of a device or spare device data and determines the lifespan of the device is known (for example, see Japanese Unexamined Patent Application Publication No. 2000-027244).

However, a maintenance record is mainly used to report details of a maintenance operation and it may be difficult to understand storage states or discard states of field devices from the maintenance record.

A healthy device which has been confirmed by checking or the like is often stored in a desk of an operator or the like separately from unused spare devices and may not be subjected to asset management.

US 2009/048948 A1 discloses an apparatus, and an associated method, for updating and reconciling asset repositories. A user event, generated by, or otherwise associated with, an asset is detected. The operations event identifies characteristics of the asset with which the event is associated. The information is compared with repository stored information. If comparison indicates dissimilarity with the newly-obtained information and the repository-stored information, the contents of the asset repository are updated to indicate the updated information.

WO 03/075206 A2 discloses that operational status information associated with a process entity in a process plant is received. The operational status information is mapped into one of a plurality of status conditions. Then, an alert message associated with the process entity is generated, where the alert message is indicative of the one status condition of the plurality of status conditions.

EP 2 801 937 A1 discloses that an industrial attestation service executing on a cloud platform collects industrial data from multiple levels of an industrial enterprise and identifies subsets of the industrial data that characterize normal operation. In the cloud platform, baselines are generated for diverse aspects of the industrial enterprise based on the identified subsets, where the baselines characterize normal operation. The baselines are used as a reference in connection with device and system attestation. Aspects of the industrial enterprise that deviate from their corresponding baselines are identified in the cloud platform. Attestation reports indicating aspects of the enterprise that have altered relative to their baselines are delivered to client devices via the cloud platform.

US 2012/173300 A1 provides an approach for infrastructure asset management. This approach comprises an end-to-end analytics driven maintenance approach that can take data about physical assets and additional external data, and apply advanced analytics to the data to generate business insight, foresight and planning information. Specifically, this approach uses a maintenance analysis tool, which is configured to: receive data about a set of physical assets of an infrastructure, and analyze the data about the set of physical assets to predict maintenance requirements for each of the set of physical assets. The maintenance analysis tool further comprises an output component configured to generate a maintenance plan based on the predicted maintenance requirements for each of the set of physical assets.

### SUMMARY

The present invention is defined in the appended independent claims to which reference should be made. Advantageous features are set out in the appended dependent claims.

Further features and aspects of the present disclosure will become apparent from the following detailed description of exemplary embodiments with reference to the attached drawings.

### BRIEF DESCRIPTION OF THE DRAWINGS

FIG. 1 is a block diagram illustrating an example of a software configuration of a device asset management apparatus according to an embodiment.
FIG. 2 is a state transition diagram illustrating an example in which a device asset state in the device asset management apparatus according to the embodiment changes.
FIG. 3 is a diagram illustrating an example in which an operating asset state in the device asset management apparatus according to the embodiment changes.
FIG. 4 is a diagram illustrating an example in which an inventory asset state in the device asset management apparatus according to the embodiment changes.
FIG. 5 is a diagram illustrating an example of a method of detecting a mismatch between an operating asset state and an inventory asset state in the device asset management apparatus according to the embodiment.
FIG. 6 is a diagram illustrating an example of state change prediction information in the device asset management apparatus according to the embodiment.
FIG. 7 is a block diagram illustrating an example of a hardware configuration in the device asset management apparatus according to the embodiment.
FIG. 8 is a block diagram illustrating an example of a device asset management system including the device asset management apparatus according to the embodiment.

### DETAILED DESCRIPTION OF THE EMBODIMENTS

The embodiments of the present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

An aspect of the present invention is to provide a device asset management apparatus, a device asset management method, a device asset management program, and a non-transitory computer readable storage medium that facilitate asset management of field device.

Hereinafter, a device asset management apparatus, a device asset management method, a device asset management program, and a non-transitory computer readable storage medium according to an embodiment of the invention will be described with reference to the accompanying drawings.

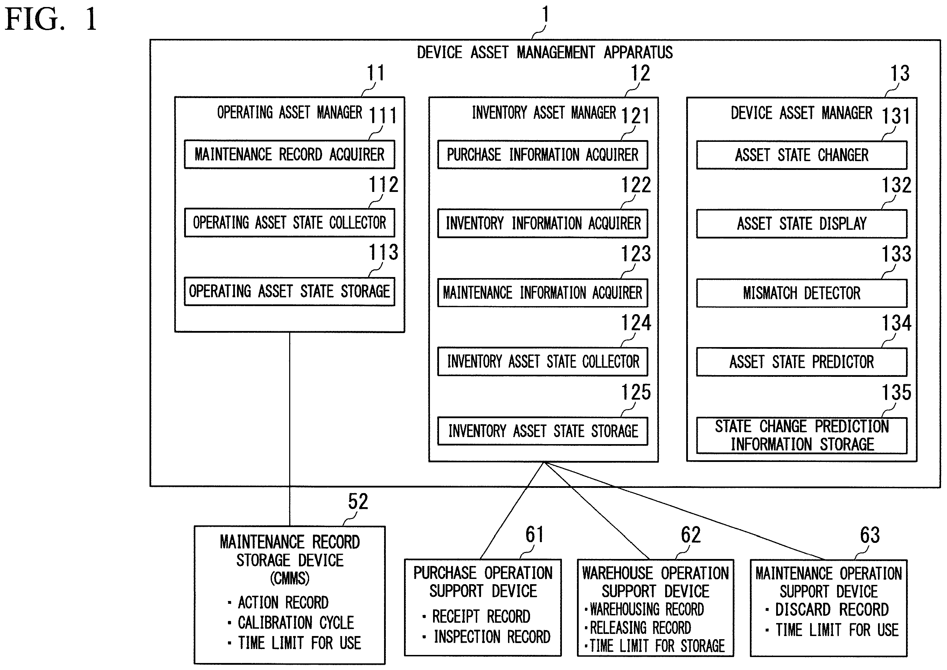

First, a software configuration of a device asset management apparatus 1 will be described with reference to FIG. 1. FIG. 1 is a block diagram illustrating an example of a software configuration of the device asset management apparatus according to the embodiment.

In FIG. 1, the device asset management apparatus 1 has functions of an operating asset manager 11, an inventory asset manager 12, and a device asset manager 13. The operating asset manager 11 has functions of a maintenance record acquirer 111, an operating asset state collector 112, and an operating asset state storage 113. The inventory asset manager 12 has functions of a purchase information acquirer 121, an inventory information acquirer 122, a maintenance information acquirer 123, an inventory asset state collector 124, and an inventory asset state storage 125. The device asset manager 13 has functions of an asset state changer 131, an asset state display 132, a mismatch detector 133, an asset state predictor 134, and a state change prediction information storage 135. The functions of the device asset management apparatus 1 are functional modules which are realized by a device asset management method that controls the device asset management apparatus 1. The device asset management program is executed by a hardware configuration of the device asset management apparatus 1 which will be described later. The device asset management program is supplied to the device asset management apparatus 1 from a server that supplies a program or a recording medium.

The maintenance record acquirer 111 acquires a maintenance record of field devices from a maintenance record storage device 52. Field devices in this embodiment are, for example, sensors or actuators that are installed in a plant and are subjected to maintenance and are devices that are newly installed in a plant and of which set values and the like are set or changed or which are calibrated, repaired, or replaced by the maintenance operation. The sensors measure data of physical quantities such as pressure, temperature, pH, and flow rate of products in processes of a plant. The maintenance record acquirer 111 acquires a maintenance record on which maintenance for field devices is recorded from the maintenance record storage device 52. The maintenance record storage device 52 is a device in which a maintenance record is stored and is, for example, a computerized maintenance management system (CMMS). A maintenance record includes information such as a record of details of a maintenance operation (an action record) performed on a field device, a calibration cycle of a field device requiring calibration, and a time limit for use of a field device of which the time limit for use is determined by deterioration or the like.

In this embodiment, the following four types are exemplified as an action record included in a maintenance record.
- Installation: installation of a healthy device in a plant or replacement thereof
- Tuning: setting or changing of parameters
- Calibration: input and output tuning of zero point tuning and period tuning
- Breakdown: out of use or off-line due to breakdown

The action record may include, for example, an action record of "uninstallation" indicating uninstallation of a field device from a plant.

A calibration cycle included in the maintenance record is information of a period which is determined in advance depending on a type of a field device. Here, the calibration cycle may be information of a date at which next calibration is necessary and which is calculated from a date at which previous calibration was performed.

The time limit for use included in the maintenance record is information of a date of a time limit for use which is determined in advance depending on a type of a field device. The time limit for use is a time limit when the field device is installed in a plant and may be changed depending on conditions of use such as a load. The time limit for use may be information of a date which is determined by breaking a seal.

The operating asset state collector 112 collects operating assets of field devices disposed in a plant which is managed by the device asset management apparatus 1. In this embodiment, it is assumed that a field device changes to an operating asset state and an inventory asset state. A new field device is purchased in a purchase operation, is delivered to a warehouse in a warehouse operation, and is stored in an inventory as a spare device. The stored field device is newly installed or is substituted for an old field device and enters an operating state. The field device in the operating state departs from the operating state due to breakdown or a time limit for use and is discarded or the like. A field device which is purchased as a new product and is stored in a warehouse is referred to as an inventory asset. On the other hand, a field device installed in a plant is referred to as an operating asset. The inventory asset is managed as a current asset in an accounting process. The operating asset is managed as a fixed asset in an accounting process. The operating asset state collector 112 collects a state of a field device which is installed in a plant and is in an operating state as an operating asset state. It is assumed that a field device changes to three states exemplified below as the operating asset state.
- Healthy state in which a field device can operate normally (Working Healthy)
- Unhealthy state in which a field device cannot operate normally (Working Unhealthy)
- Calibration-required state in which a calibration of a field device is required

### (Calibration Required)

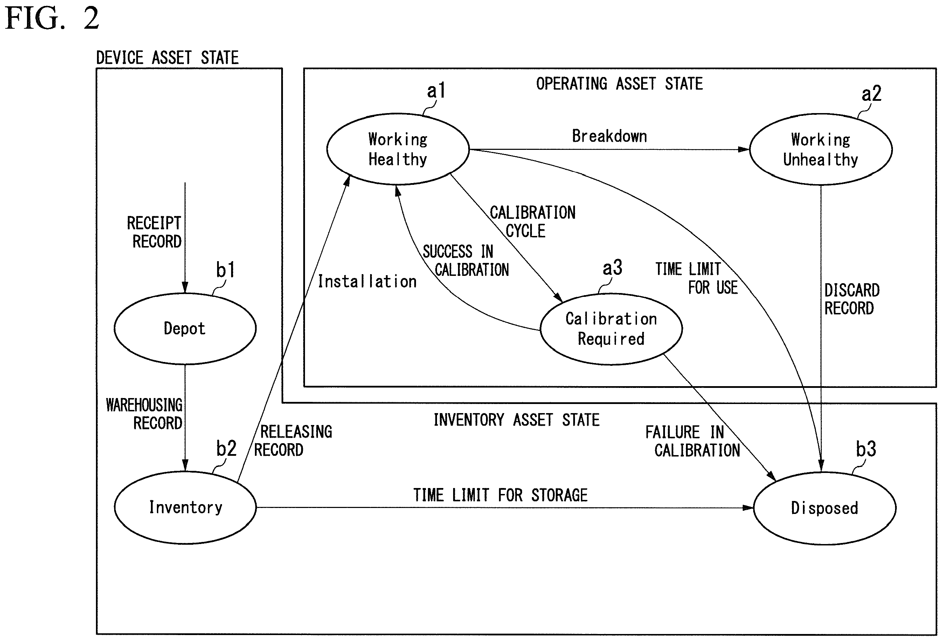

Details of a change of an operating asset state will be described later with reference to FIG. 2

The operating asset state storage 113 stores operating asset states of field devices which are collected by the operating asset state collector 112. The operating asset state storage 113 stores the operating asset states, for example, using an internal storage or an external storage of the device asset management apparatus 1.

The inventory asset manager 12 manages an inventory asset state which is an asset state of a field device which has been warehoused as an inventory asset. A field device changes to three states exemplified below as the inventory asset state.
- Warehoused state in which a field device has been received by a purchase department (Depot)
- Inventory state in which a field device has been stored in a warehouse (Inventory)
- Discard state in which a field device has been discarded (Disposed)

Details of the change of the inventory asset state will be described later with reference to FIG. 2.

The purchase information acquirer 121 acquires purchase information from a purchase operation support device 61. The purchase operation support device 61 is a device that supports a purchase operation of a factory or a company including a plant as a whole and can be realized by an enterprise resource planning (ERP) system dedicated to process production industries. The purchase information acquired by the purchase information acquirer 121 includes, for example, a receipt record which is a record when a purchased field device is warehoused or an inspection record which is a record when the received field device is inspected by an inspector.

The inventory information acquirer 122 acquires inventory information from a warehouse operation support device 62. The warehouse operation support device 62 is a device that supports a warehouse operation of a factory or a company including a plant as a whole and can be realized by an ERP system dedicated to process production industries. The inventory information acquired by the inventory information acquirer 122 includes, for example, a warehousing record which is a record when a purchased field device is warehoused in a warehouse, a releasing record which is a record when the warehoused field device is released, or information on a time limit for storage of the field device. The time limit for storage is information of a date of the time limit for storage which is determined in advance depending on the type of a field device. The time limit for use and the time limit for storage are different, in that the time limit for use defines deterioration in an operating state of a field device which is installed in a plant, but the time limit for storage defines deterioration in a state in which a field device is stored in a warehouse. The time limit for storage may be acquired, for example, from the maintenance record storage device 52 similarly to the time limit for use.

"Releasing" in this embodiment means that a field device which is stored in a warehouse and is in an inventory state is released to a maintenance operator. The released field device is installed in a plant by the maintenance operator. That is, it is assumed that the asset state of the released field device changes from the inventory asset state to the operating asset state.

"Warehouse" in this embodiment refers to a virtual warehouse in which a field device is in a stored state, but does not refer to physical instruments such as racks or shelves for storage. Accordingly, even when a purchased field device is handed over to a maintenance operator without being carried and placed on a rack, it is assumed that the field device is released from an inventory state in which the field device was once warehoused in a warehouse during carrying. That is, "warehousing" refers to entrance into a state in which a field device can be handed over to a maintenance operator, and "releasing" refers to entrance into a state in which a field device is handed over to a maintenance operator and can be installed in a plant. A released field device is not stored by a maintenance operator, but is installed in a plant as an operating asset.

The maintenance information acquirer 123 acquires maintenance information from a maintenance operation support device 63. The maintenance operation support device 63 is a device that supports a maintenance operation of a factory or a company including a plant as a whole and can be realized by an ERP system dedicated to process production industries. The maintenance information acquired by the maintenance information acquirer 123 includes, for example, a discard record which is a record when a field device is discarded due to breakdown or elapse of a time limit for use or information of the time limit for use. The information of the time limit for use is the same as the information of the time limit for use included in the maintenance record which is acquired from the maintenance record storage device 52. Accordingly, the maintenance information acquirer 123 may acquire the information of the time limit for use from the maintenance record storage device 52 instead of the maintenance operation support device 63.

In FIG. 1, the purchase operation support device 61, the warehouse operation support device 62, and the maintenance operation support device 63 are illustrated as independent devices. However, two or more devices of the purchase operation support device 61, the warehouse operation support device 62, and the maintenance operation support device 63 may be combined. The purchase operation support device 61, the warehouse operation support device 62, and the maintenance operation support device 63 have only to have the functions of providing information such as the above-mentioned records, and other functions or names of the devices are not particularly limited.

The inventory asset state collector 124 collects inventory assets of field devices which are disposed in a plant which is managed by the device asset management apparatus 1. The inventory asset state collector 124 collects information on the inventory asset states (the warehoused state, the inventory state, and the discarded state) of the field devices.

The inventory asset state storage 125 stores the inventory asset states of the field devices collected by the inventory asset state collector 124. The inventory asset state storage 125 stores the inventory asset states, for example, using an internal storage or an external storage of the device asset management apparatus 1.

The device asset manager 13 manages "device assets" including operating assets which are managed by the operating asset manager 11 and inventory assets which are managed by the inventory asset manager 12. Hereinafter, it is assumed that "device assets" include both the operating assets and the inventory assets.

The asset state changer 131 transitions (changes) the operating asset state based on a maintenance record which is information of the maintenance operation performed on field devices and changes the inventory asset state based on warehousing and releasing information of the field devices. Hereinafter, the operating asset state and the inventory asset state are together referred to as a "device asset state". The operating asset state and the inventory asset state may be referred to as an "asset state" when not distinguished. Details of the change of the device asset state by the asset state changer 131 will be described later with reference to FIG. 2.

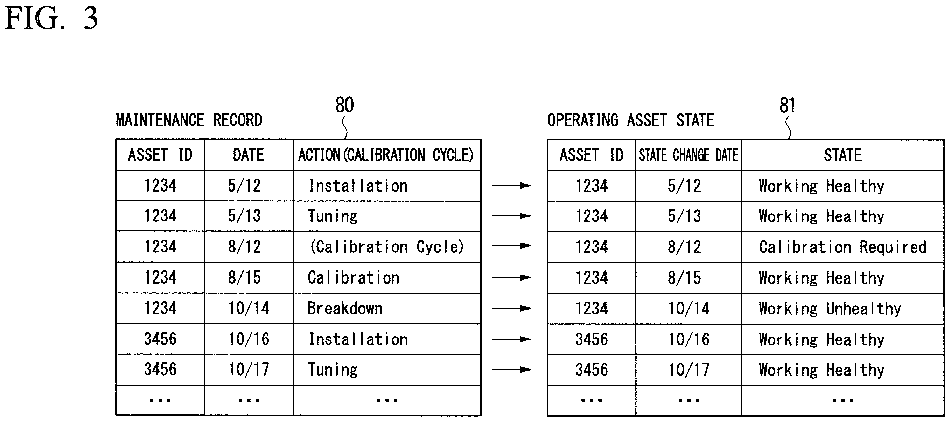

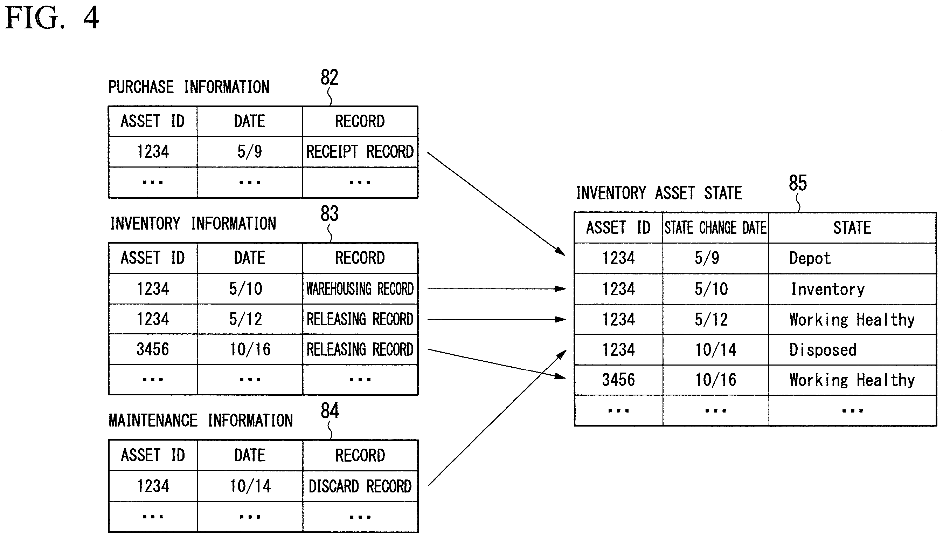

The asset state display 132 generates and displays the operating asset state and the inventory asset state (the device asset state) of a field device. The asset state display 132 displays the device asset state in a state transition diagram. The state transition diagram is a diagram expressing a state transition model, and a graphical expression (illustrated in FIG. 2), a table expression (illustrated in FIGS. 3 and 4 and the like), or a numerical expression may be indiscriminately used as long as it expresses transition of a state. The state transition diagram includes expression methods such as a Moore machine, a Mealy machine, a unified modeling language (UML) state transition diagram, and a state transition table. The asset state display 132 displays the generated state transition diagram on a display device such as a display. The asset state display 132 may print out the generated state transition diagram using a printer or the like.

The mismatch detector 133 detects a mismatch between the operating asset state and the inventory asset state. Since the asset state of a newly purchased field device changes from the inventory asset state to the operating asset state as described above, the asset state of a field device changes to one of the inventory asset state and the operating asset state. The inventory asset state changes based on the warehousing and releasing information of the field device. The operating asset state changes based on the maintenance record. Accordingly, the inventory asset state and the operating asset state of one field device are stored to match each other. However, when information for changing the inventory asset state or the operating asset state has not been acquired, a mismatch occurs between the inventory asset state and the operating asset state. For example, when a maintenance operator installs a field device stored in a warehouse in a plant without preparing a releasing record, the field device has both the inventory asset state and the operating asset state and thus a mismatch occurs. When a maintenance operator performs offline repair of a field device that has been detached from a plant and discarded and installs the field device to the plant again, the operating asset state instead of a change from the inventory asset state is generated and a mismatch occurs. The mismatch detector 133 can easily detect a mismatch between the inventory asset state and the operating asset state by comparing the inventory asset state and the operating asset state.

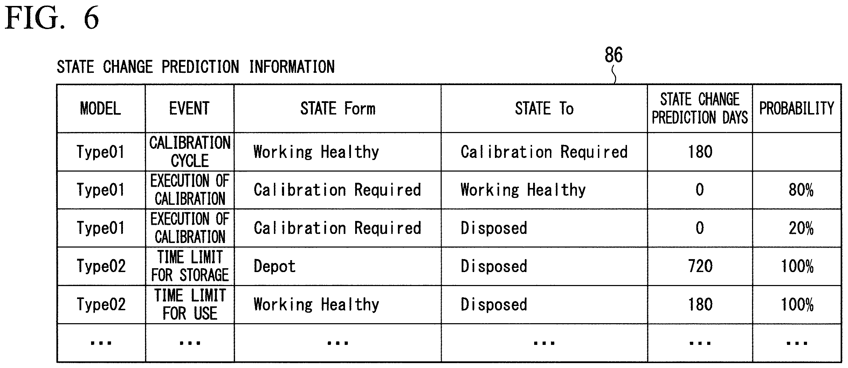

The asset state predictor 134 predicts a change of the asset state based on state change prediction information. The state change prediction information is information in which a type (a model) of a field device and a prediction of a change of the inventory asset state or the operating asset state are recorded in association with each other. As the state change prediction information in this embodiment, prediction of a change of the operating asset state to a calibration-required state (Calibration Required) based on a calibration cycle of a field device, prediction of a change of the operating asset state to the discarded state (Disposed) based on a time limit for use of a field device, and prediction of a change from the inventory asset state to the discarded state (Disposed) based on a time limit for storage of a field device are exemplified. Details of the state change prediction information will be described later with reference to FIG. 6.

The state change prediction information storage 135 stores the state change prediction information. The state change prediction information storage 135 stores the state change prediction information, for example, using an internal storage or an external storage of the device asset management apparatus 1.

The functions of the operating asset manager 11, the inventory asset manager 12, and the device asset manager 13 in the device asset management apparatus 1, the functions of the maintenance record acquirer 111, the operating asset state collector 112, and the operating asset state storage 113 in the operating asset manager 11, the functions of the purchase information acquirer 121, the inventory information acquirer 122, the maintenance information acquirer 123, the inventory asset state collector 124, and the inventory asset state storage 125 in the inventory asset manager 12, and the functions of the asset state changer 131, the asset state display 132, the mismatch detector 133, the asset state predictor 134, and the state change prediction information storage 135 in the device asset manager 13 are embodied by software. However, one or more of these functions may be embodied by hardware. The functions may be embodied by dividing one function into a plurality of functions. The functions may be embodied by incorporating two or more functions into one function.

A change of a device asset state will be described below with reference to FIG. 2. FIG. 2 is a state transition diagram illustrating an example of a change of a device asset state in the device asset management apparatus according to the embodiment.

In FIG. 2, the device asset state includes two states of an operating asset state and an inventory asset state as described above. The operating asset state includes a healthy state (Working Healthy) a1, an unhealthy state (Working Unhealthy) a2, and a calibration-required state (Calibration Required) a3. The inventory asset state includes a warehoused state (Depot) b1, an inventory state (Inventory) b2, and a discarded state (Disposed) b3.

The state in the state transition diagram illustrated in FIG. 2 changes individually for field devices. That is, each field device has an independent device asset state. The change of the device asset state is performed by the asset state changer 131 illustrated in FIG. 1.

First, when a receipt record indicating that a field device is received by a purchase department is acquired from the purchase operation support device 61, the device asset state changes to the warehoused state b1. The receipt record includes at least information (an asset ID) for identifying the field device. The asset ID (Identification) is used to manage the device asset state of each field device. The receipt record may include information of a date at which the corresponding field device is received.

In the device asset state of the warehoused state b1, when a warehousing record indicating that a field device is stored in a warehouse and enters the inventory state is acquired from the warehouse operation support device 62, the device asset state changes to the inventory state b2. The inventory state b2 is a state in which the corresponding field device can be released to a maintenance operator. The warehousing record is recorded, for example, when a warehouse operator confirms that the field device is warehoused in the warehouse.

In the device asset state of the inventory state b2, when the field device is installed in a plant, the device asset state changes to the healthy state a1. Installation of the field device in the plant can be recognized, for example, by acquiring a releasing record indicating that the field device in the inventory state is handed over to a maintenance operator from the warehouse operation support device 62. That is, when the released field device is necessarily installed in a plant, acquisition of the releasing record can be considered to be installation of the field device. The healthy state a1 is a state in which the field device is installed in the plant and can operate normally. When the device asset state changes from the inventory state b2 to the healthy state a1, the asset state of the field device changes from the inventory asset state to the operating asset state. The releasing record is recorded, for example, when a warehouse operator confirms that the field device is released. In FIG. 2, an example in which acquisition of a releasing record is considered to be installation of the field device in the plant is illustrated, but installation of a field device in a plant may be recognized using another method. For example, connection of a field device may be recognized by detecting the field device in a network to which the field device is connected. Connection of a field device may be recognized by acquiring information indicating completion of installation from the maintenance operation support device 63.

In FIG. 2, an example in which a released field device is necessarily installed in a plant is illustrated, but, for example, a state (a local storage state) in which a maintenance operator owns the field device before being installed may be defined as an inventory asset state. In a maintenance operation which is periodically performed with the plant stopped, the maintenance operator may prepare a field device to be replaced in advance and enter the local storage state. FIG. 2 illustrates an example of a change of the device asset state, where an asset state to be defined can be appropriately determined depending on a maintenance method of a field device.

On the other hand, when a time limit for storage of a field device elapses in the device asset state of the inventory state b2, the device asset state changes to the discarded state b3. The discarded state b3 is a state in which a field device is discarded and asset management is not necessary. The field device in the discarded state b3 is removed, for example, from a book of asset management (not illustrated). A spare device of a field device may be set to the inventory state b2 such that an operation rate of a plant is improved in the plant. By managing the inventory asset state based on the time limit for storage, it is possible to easily understand assets which are discarded in the inventory asset state.

In the device asset state of the healthy state a1, when an action record indicating that a field device is out of order is acquired from the maintenance record storage device 52, the device asset state changes to the unhealthy state a2. The unhealthy state a2 is a state in which the field device cannot operate normally. The field device installed in a plant may not be immediately substituted in spite of breakdown thereof and may be installed off-line until a stop due to next periodic maintenance of the plant or the like. By defining the unhealthy state a2 as the device asset state, it is possible to perform asset management of a field device which is installed in a breakdown state.

When a calibration cycle of a field device elapses in the device asset state of the healthy state a1, the device asset state changes to the calibration-required state a3. Information of the calibration cycle can be acquired from the maintenance record storage device 52. The calibration-required state a3 is a state in which calibration is required for a field device. A field device may deviate in zero point or lifespan depending on conditions of use. The calibration cycle may be determined in advance depending on a type of the field device, conditions of use of the field device, necessity for legal inspection, and the like. A maintenance operator performs a maintenance operation for calibration on the field device in the calibration-required state a3. By managing the calibration-required state a3, it is possible to easily plan maintenance of the field device.

In the device asset state of the calibration-required state a3, when an action record indicating success in calibration of a field device is acquired from the maintenance operation support device 63, the device asset state changes to the healthy state a1 again. That is, a field device which is installed in a plant and enters the operating asset state is used while changing between the healthy state a1 and the calibration-required state a3. Calibration of a field device includes a calibration method which is performed in a state in which the field device is installed in the plant and a calibration method which is performed in a state in which the field device is detached from the plant. In FIG. 2, even when the calibration method which is performed in a state in which the field device is detached from the plant is performed, it is assumed that a field device that succeeds in calibration changes to the healthy state a1 as the operating asset state. That is, it is assumed that an operation of temporality setting a field device that succeeds in calibration to the local storage state is not performed.

On the other hand, in the device asset state of the calibration-required state a3, when an action record indicating that a field device fails in calibration is acquired from the maintenance operation support device 63, the device asset state changes to the discarded state b3.

In the device asset of the healthy state a1, when the time limit for use of a field device elapses, the device asset state changes to the discarded state b3. Information of the time limit for use can be acquired from the maintenance operation support device 63.

In the device asset state of the unhealthy state a2, when a discard record indicating that a field device is discarded is acquired from the maintenance operation support device 63 (or the warehouse operation support device 62), the device asset state changes to the discarded state b3. When the device asset state changes to the discarded state b3, the field device changes from the operating asset state to the inventory asset state and thus the record of the operating asset state is deleted. The change from the unhealthy state a2 to the discarded state b3 may be performed, for example, by receiving an action record of "uninstallation" indicating that the field device is detached from the plant from the maintenance operation support device 63.

The state transition diagram illustrated in FIG. 2 is displayed on, for example, a display by the asset state display 132 described above with reference to FIG. 1. The state transition diagram may be individually displayed for each field device, or one state transition diagram may be displayed for a plurality of field devices. Definition or addition of an asset state which is defined in the state transition diagram may be performed, for example, by the asset state changer 131. By confirming the asset state of each field device from the state transition diagram, it is possible to easily perform asset management of field devices.

A change of the operating asset state will be described below with reference to FIG. 3. FIG. 3 is a diagram illustrating an example of a change of the operating asset state in the device asset management apparatus according to the embodiment.

In FIG. 3, the maintenance record 80 includes data fields of "asset ID", "date", and "action". Each row of the maintenance record 80 represents a record of one field device.

The data field of "asset ID" is information for uniquely identifying a field device and is given, for example, when the field device is received. In this embodiment, the asset state of each field device is managed using an asset ID. For example, a tag ID is used as information for identifying a field device in a plant, but the same tag ID is often used for substituted field devices, and the tag ID is a parameter which is set when the field device is installed in the plant. Accordingly, the tag ID may not be suitable as information for asset management including the inventory asset state.

The data field of "date" is a date at which a record of each field device is recorded on the maintenance record (time is not illustrated in the maintenance record 80). The maintenance record is prepared in the order of dates.

The data field of "action" is information of an action record indicating details of a maintenance operation which is performed by a maintenance operator. In the data field of "action", details of "installation" indicating an installation operation or a substitution operation of a field device which is a healthy device in a plant, "tuning" indicating a setting operation or a changing operation of a parameter of a field device, "calibration" indicating a calibrating operation of a field device, and "breakdown" indicating an out-of-use operation or an off-line operation due to breakdown of a field device are recorded. The data field of "action" may include an action of "uninstallation" indicating detachment of a field device from the plant as described above.

Information of a calibration cycle and a time limit for use of a field device is used as information for changing the operating asset state as described above. In the maintenance record 80, the data field of "action" may include such information. "Calibration Cycle" illustrated in the drawing indicates information of a calibration cycle.

The operating asset state 81 illustrates a change of the operating asset state corresponding to the records illustrated in the maintenance record 80. The operating asset state 81 includes data fields of "asset ID", "state change date", and "state". The data field of "asset ID" is the same as described with reference to the maintenance record 80 and thus description thereof will not be repeated.

The data field of "state change date" corresponds to the data field of "date" in the maintenance record 80 and indicates a date on which the operating asset state changes in the maintenance record. However, the state change date may be different from a recording date of the maintenance record. For example, when the maintenance record is not acquired in real time, the change of the operating asset state is affected by the date at which the maintenance record is acquired.

The data field of "state" indicates a state of a change destination of the operating asset state corresponding to the data field of "action". For example, on May 12, the "state" of a field device with an "asset ID" of "1234" changes to "Working Healthy (a healthy state)" based on "Installation". On May 13, the "state" of the field device changes to "Working Healthy (a healthy state)" (no state change) based on "Tuning". On August 12, the "state" of the field device changes to "Calibration Required (a calibration-required state)" based on the "Calibration Cycle". When the data field of "action" includes an action of "Uninstallation" indicating detachment of a field device from a plant, the operating asset state may change to delete the record of the operating asset state.

In FIG. 3, an example in which the operating asset states 81 in FIG. 3 change in accordance with one record of the maintenance record in the maintenance record 80 is illustrated, but, for example, the operating asset states may change to correspond to records of a plurality of maintenance records. For example, the operating asset state may change to "B1" when maintenance records "A1" and "A2" are established, and the operating asset state may change to "B2" when maintenance records "A1" and "A3" are established.

A change of the inventory asset state will be described below with reference to FIG. 4. FIG. 4 is a diagram illustrating an example of a change of the inventory asset state in the device asset management apparatus 1 according to the embodiment.

In FIG. 4, the purchase information 82 is acquired from the purchase operation support device 61 by the purchase information acquirer 121. The purchase information 82 includes data fields of "asset ID", "date", and "record". Each row of the purchase information represents a record of each field device. A receipt record when a field device is received is recorded on the data field of "record".

In FIG. 4, the inventory information 83 is acquired from the warehouse operation support device 62 by the inventory information acquirer 122. The inventory information 83 includes data fields of "asset ID", "date", and "record". Each row of the inventory information represents a record of each field device. A warehousing record when a field device is warehoused and a releasing record when the field device is released are recorded on the data field of "record".

In FIG. 4, the maintenance information 84 is acquired from the maintenance operation support device 63 by maintenance information acquirer 123. The maintenance information 84 includes data fields of "asset ID", "date", and "record". Each row of the maintenance information represents a record of each field device. A discard record when a field device is discarded is recorded on the data field of "record".

In FIG. 4, the inventory asset state 85 illustrates a change destination of the inventory asset state corresponding to the records illustrated in the purchase information 82, the inventory information 83, and the maintenance information 84. The inventory asset state 85 includes data fields of "asset ID", "state change date", and "state".

The data field of "state change date" indicates a date on which the inventory asset state changes in response to acquisition of the data field of "record" in the purchase information 82, the inventory information 83, and the maintenance information 84. The state change date may be different from a date in the data field of "date" in the purchase information 82, the inventory information 83, and the maintenance information 84. For example, when the purchase information or the like is not acquired in real time, the change of the inventory asset state is affected by the date at which the purchase information or the like is acquired.

The data field of "state" indicates a state of a change destination of the inventory asset state corresponding to the data field of "record". For example, on May 9, the "state" of a field device with an "asset ID" of "1234" changes to "Depot (a warehoused state)" to correspond to a "receipt record". On May 10, the "state" of the field device changes to "Inventory (an inventory state)" to correspond to a "warehousing record". On May 12, the "state" of the field device changes to "Working Healthy (a healthy state)" to correspond to a "releasing record. The "healthy state" of a change destination is the operating asset state. On October 14, the "state" of the field device changes to "Disposed (a discarded state)" to correspond to a "discard record".

In FIG. 4, an example in which the inventory asset states 85 in FIG. 4 change to correspond to one record of the information in the purchase information 82, the inventory information 83, and the maintenance information 84 is illustrated, but, for example, the inventory asset states may change to correspond to records of a plurality of maintenance records.

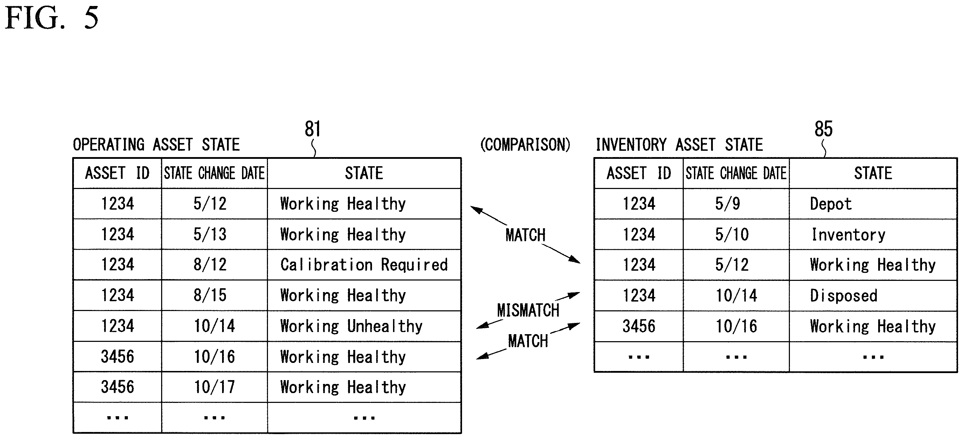

A method of detecting a mismatch between the operating asset state and the inventory asset state will be described below with reference to FIG. 5. FIG. 5 is a diagram illustrating an example of the method of detecting a mismatch between the operating asset state and the inventory asset state in the device asset management apparatus 1 according to the embodiment.

In FIG. 5, the operating asset state 81 described above with reference to FIG. 3 and the inventory asset state 85 described above with reference to FIG. 4 are illustrated.

A mismatch between the operating asset state 81 and the inventory asset state 85 can be detected depending on whether asset states of field devices with the same asset ID mismatch between the operating asset state and the inventory asset state. For example, on May 12, "Working Healthy (a healthy state)" is recorded as a change destination in the inventory asset state based on a releasing record. Since "Working Healthy (a healthy state)" is recorded for the same field device on the same date in the operating asset state, it is detected that the operating asset state 81 and the inventory asset state 85 match each other.

On the other hand, on October 14, the field device changes to "Disposed (a discarded state)" in the inventory asset state, but "Working Unhealthy (an unhealthy state)" is recorded in the operating asset state. Accordingly, a mismatch between the operating asset state 81 and the inventory asset state 85 is detected. This mismatch is caused, for example, for a reason that a maintenance operator does not record discard of the field device on the maintenance operation support device 63 (or the warehouse operation support device 62). When discard is not recorded, the device asset management apparatus 1 cannot acquire a discard record, a record in which the operating asset state 81 is an unhealthy state is not deleted but remains, and thus a mismatch with the inventory asset state 85 is caused. The mismatch detector 133 in FIG. 1 detects a mismatch by comparing the operating asset state 81 with the inventory asset state 85 in the field devices with the same asset ID. In FIG. 5, an example in which a mismatch in asset state of two field devices with asset IDs of "1234" and "3456" is detected is illustrated. However, in a large-scale plant, since a plurality of maintenance operators maintains a plurality of field devices, it may be difficult to manage an asset state using a paper maintenance record. By automatically detecting a mismatch in asset state as illustrated in FIG. 5, it is possible to easily manage an asset state even when the number of field devices is large.

State change prediction information will be described below with reference to FIG. 6. FIG. 6 is a diagram illustrating an example of state change prediction information in the device asset management apparatus 1 according to the embodiment.

In FIG. 6, the state change prediction information 86 includes data fields of "model", "event", "state (From)", "state (To)", "state change prediction day", and "probability".

The state change prediction information 86 is fundamental information for predicting a change of an asset state, which is predicted for field devices of all models, in a date and a probability at which the change is predicted. The asset state predictor 134 predicts a change of an asset state of each field device based on the state change prediction information 86.

The data field of "model" is a model name of a field device and is given based on a type of the field device. The information of a model can be acquired from the corresponding field device via a network.

Information of a reason for occurrence of a change is input to the data field of "event". An "event" is information of, for example, "calibration cycle", "execution of calibration", "time limit for storage", and "time limit for use". For example, when the "event" is a "calibration cycle", a state change is caused for a reason that the calibration cycle elapses. When the event is "execution of calibration", a state change is caused for a reason that calibration is executed.

Information of a state of a change source and a state of a change destination is input to the data field of "state (From)" and the data field of "state (To)".

The "state change prediction day" is a predicted date until a state changes due to an event in the data field of "event". The predicted date is, for example, a date which is determined in advance depending on a model of a field device or a date which is calculated from history based on a maintenance record.

The data field of "probability" is a probability that a state change occurs in an event. In state changes from one state to a plurality of states, a probability of each state change is set.

For example, a first row represents state change prediction when the "event" is "calibration cycle" in a field device with a "model" of "TypeOl", and indicates that the "state change prediction day" until a state in which the "state (From)" is "Working Healthy (a healthy state)" changes to a state in which the "state (To)" is "Calibration Required (a calibration-required state)" is "180 days". Since the calibration cycle is an event which occurs necessarily with the lapse of time (a probability thereof is not necessary), a numerical value is not input to the "probability" thereof. That is, in the state change prediction information 86, the state of the field device of Type01 changes from the healthy state to the calibration-required state for a reason that 180 days which is the calibration cycle elapses.

A second row and a third row are state change prediction when the "event" is "execution of calibration" for the field device with a "model" of "Type01". The second row represents that the "probability" that a state in which the "state (From)" is "Calibration Required (a calibration-required state)" changes to a state in which the "state (To)" is "Working Healthy (a healthy state)" due to success in calibration is "80%". On the other hand, the third row represents that the "probability" that a state in which the "state (From)" is "Calibration Required (a calibration-required state)" changes to a state in which the "state (To)" is "Disposed (a discarded state)" due to success in calibration is "20%". Since whether calibration succeeds or fails is determined immediately after the calibration is executed, the "state change prediction day" is "0" days. In the execution of calibration, since the calibration result is success or failure, the "Calibration Required" is any one of the "Working Healthy" (80%) or the "discarded state" (20%) (80% + 20% = 100%). However, when whether calibration success or fails cannot be determined by one execution of calibration, the probability that the calibration-required state is maintained may be set.

A fourth row is state change prediction when the "event" is the "time limit for storage" for a field device with a "model" of "Type02" and represents that the "state change prediction day" until a state in which the "state (From)" is "Depot (a warehoused state)" changes to a state in which the "state (To)" is "Disposed (a discarded state)" is "720" days. The "probability" is "100%" in FIG. 6. However, even when the time limit for storage is passed, it may be determined through visual observation that the field device is usable unlike the calibration cycle. In this case, for example, the "probability" that the "state (To)" will be the "discarded state" can be set to "60%" and the "probability that the "state (To)" will be the "Calibration Required" in another row can be set to "40%".

A fifth row is state change prediction when the "event" is the "time limit for use" for the field device with a "model" of "Type02" and represents that the "state change prediction day" until a state in which the "state (From)" is "Working Healthy (a healthy state)" changes to a state in which the "state (To)" is "Disposed (a discarded state)" is "180 days". Similarly to the time limit for storage, the probability of the "Calibration Required" may be set for the time limit for use.

Since a change of an asset state can be predicted based on the state change prediction information 86, for example, it is possible to make a plan of after what time a field device operating currently in a plant will enter a discarded state in the future and will be substituted. Accordingly, it is possible to budget for purchase of a spare device in maintenance of field devices and to easily manage assets of the field devices.

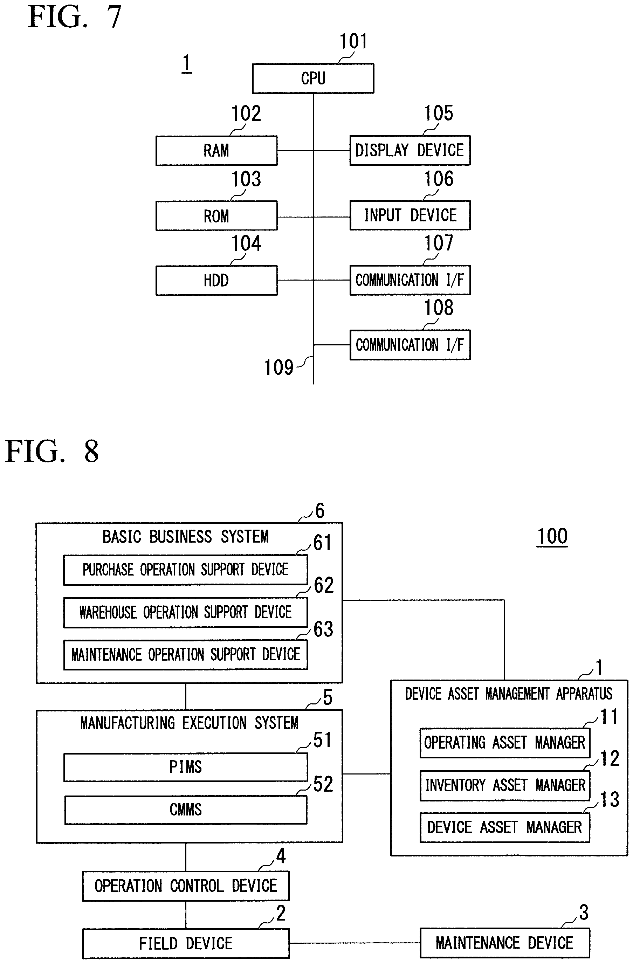

A hardware configuration of the device asset management apparatus 1 will be described below with reference to FIG. 7. FIG. 7 is a block diagram illustrating an example of a hardware configuration of the device asset management apparatus 1 according to the embodiment.

In FIG. 7, the device asset management apparatus 1 includes a central processing unit (CPU) 101, a random access memory (RAM) 102, a read only memory (ROM) 103, a hard disk drive (HDD) 104, a display device 105, an input device 106, a communication interface (I/F) 107, a communication I/F 108, and a bus 109 connecting these elements.

The device asset management apparatus 1 is, for example, a server device, a general-purpose computer such as a desktop PC, an FA computer, a device such as a PLC, a notebook or tablet computer, a PDA, or smartphone. The hardware of the device asset management apparatus 1 may be constituted by a single device or may be a system including a combination of a plurality of devices. The device asset management apparatus 1 may share hardware with another device.

The CPU 101 controls the device asset management apparatus 1 by executing a program stored in the RAM 102, the ROM 103, or the HDD 104. The CPU 101 executes a device asset management program for realizing the operation of the device asset management apparatus 1. The device asset management program is acquired from a recording medium on which the device asset management program is recorded or a server that provides the device asset management program via a network, is installed in the HDD 104, and is stored in the RAM 102 to be readable by the CPU 101.

The display device 105 is, for example, a liquid crystal display having a display function. The display device 105 may be embodied in various forms such as a head-mounted display, a spectacle type display, and a wristwatch type display. The input device 106 is, for example, a keyboard or a mouse having an input function. The input device 106 may be a microphone for receiving voice information or a camera or a scanner for receiving image information. The display device 105 and the input device 106 may be embodied by a device having a display function and an input function, such as a touch panel.

The communication I/F 107 controls communication with another device such as a manufacturing execution system 5, an operation control device 4, or a maintenance device 3 which will be described later by wired communication or wireless communication. The communication I/F 107 controls communication such as data transmission and reception, voice call, or mail transmission and reception with another device connected thereto. The communication I/F 107 controls communication corresponding to a universal communication standard such as wireless LAN communication, wired LAN communication, infrared communication, or short-range radio communication.

The communication I/F 108 controls communication with another device such as the operation control device 4, the maintenance device 3, or a field device which is not illustrated by wired communication or wireless communication. The communication 1/F 108 controls communication corresponding to a field communication standard such as ISA100, HART (registered trademark), BRAIN (registered trademark), FOUNDATION Fieldbus, or PROFIBUS.

A device asset management system including the device asset management apparatus 1 will be described below with reference to FIG. 8. FIG. 8 is a block diagram illustrating an example of a device asset management system including the device asset management apparatus 1 according to the embodiment.

The functional units of the device asset management apparatus 1 described above with reference to FIG. 1 represent details of the functions and do not limit a device as hardware by which the functions are performed. For example, the device asset management apparatus 1 may be embodied by a single device or may be embodied by a system including a plurality of devices. The functions of the device asset management apparatus 1 may be distributed and performed in a plurality of devices. Some of a plurality of devices may be embodied, for example, by a cloud service which is embodied by cloud computing. The device asset management system 100 including the device asset management apparatus 1 illustrated in FIG. 8 is an embodiment when the functions of the maintenance record storage device 52 and the like from which the device asset management apparatus 1 acquires information and which have been described with reference to FIG. 1 are provided in a plant system. The functions of the device asset management apparatus 1 may be distributed to some devices of the device asset management system 100. That is, the device asset management system 100 is an embodiment of the device asset management apparatus 1.

In FIG. 8, the device asset management system 100 includes a device asset management apparatus 1, a field device 2, a maintenance device 3, an operation control device 4, a manufacturing execution system 5, and a basic business system 6.

The device asset management apparatus 1 has the functions of the operating asset manager 11, the inventory asset manager 12, and the device asset manager 13 and is connected to the manufacturing execution system 5 and the basic business system 6 to communicate therewith.

The field device 2 has a communication function corresponding to a communication standard dedicated to industrial instruments, such as ISA 100 which is a communication standard of the international society of automation (ISA), Highway addressable remote transducer (HART: registered trademark), BRAIN (registered trademark), FOUNDATION Fieldbus, or PROFIBUS, and communicates with the operation control device 4. The field device 2 provides process data acquired by a sensor and the like to the operation control device 4. Although not illustrated in FIG. 8, the field device 2 includes one or more field devices communicating in such a communication standard.

The maintenance device 3 is a device that performs a maintenance operation on the field device 2. The maintenance device 3 is, for example, a hand-held terminal device that performs maintenance items such as periodic maintenance, changing of set information (parameters) set in the field device 2, tuning of zero point, and a loop test of the field device. The maintenance device 3 may be a device that automatically records a maintenance result. When a maintenance operator performs a maintenance operation of the field device 2 using the maintenance device 3, parameters of the field device may be changed. For example, in the tuning of a zero point, the zero point of the field device may be changed. The parameters of the field device 2 may be changed to change the operation state of processes. A maintenance operator records the executed maintenance operation on a maintenance record such as report sheet and reports the executed maintenance operation to a maintenance manager who manages the maintenance operator. The maintenance manager records the maintenance record on the maintenance record storage device (CMMS) 52. When the maintenance device 3 is a device that automatic records the maintenance result and generates a maintenance record, the maintenance device 3 may provide the maintenance record to the CMMS 52 and store the maintenance record therein.

The operation control device 4 controls processes in a plant by controlling pumps, valves, heaters, and the like which are not illustrated based on process data acquired from the field device 2. The operation control device 4 is a control device such as a programmable logic controller (PLC). The operation control device 4 provides the manufacturing execution system 5 with information of the process data acquired from the field device 2, a communication state of the field device 2, parameters set for the field device 2 in the maintenance operation, and the like.

The manufacturing execution system 5 is, for example, a manufacturing execution system (MES) which is located between the basic business system 6 and the operation control device 4, and monitors or manages information of the field device acquired by the operation control device 4. The manufacturing execution system 5 is a general-purpose computer such as a server device or a desktop PC. The manufacturing execution system may have a function of a plant information management system (PIMS) 51 or the CMMS 52. The manufacturing execution system 5 provides the basic business system 6 with the information such as parameters acquired from the operation control device 4.

The PIMS 51 serves as a plant information management system that collects and records information of the plant. In FIG. 8, the PIMS 51 collects and records information of the field device 2 via the operation control device 4 (or directly without passing through the operation control device 4). The PIMS 51 collects information of the field device 2 in a time series and records the collected information as history data (historian).

The CMMS 52 stores a maintenance record of a plant and manages a maintenance plan. The CMMS 52 acquires operation history of the maintenance operation for the field device which has been executed and recorded by the maintenance device 3 from a plurality of maintenance devices 3 and stores the acquired operation history as a maintenance record. The CMMS 52 may record the maintenance operation executed by a maintenance operator as maintenance information to be manually recordable. The CMMS 52 may store information which is used for the maintenance operation, such as the time limit for calibration or the time limit for use of the field device 2.

The basic business system 6 is an enterprise resource planning (ERP) system dedicated to process production industries for managing business resources such as accounting, production management, and sales management. The basic business system 6 has the function of the purchase operation support device 61. The basic business system 6 has the function of the warehouse operation support device 62. The basic business system 6 has the function of the maintenance operation support device 63. The purchase operation support device 61, the warehouse operation support device 62, and the maintenance operation support device 63 may be embodied by programs that provide the functions. The basic business system 6 is, for example, a general-purpose computer such as a server device or a desktop PC.

By embodying the device asset management system 100 in the configuration illustrated in FIG. 8, for example, by assembling the device asset management apparatus 1 into an existing plant control system, it is possible to easily construct the function of the device asset management apparatus 1 described above with reference to FIG. 1 without stopping an operation of a plant.

As described above, the device asset management apparatus according to this embodiment includes an operating asset state storage which stores an operating asset state in which an asset state of a field device is represented as an operating state, an inventory asset state storage which stores an inventory asset state in which the asset state is represented as an inventory state, an asset state changer configured to change at least one of the operating asset state and the inventory asset state based on at least one of information on a maintenance operation performed to the field device and information on warehousing and releasing of the field device, and an asset state display configured to display the operating asset state and the inventory asset state, and thus can easily perform asset management of the field device.

The device asset management apparatus 1 has only to be a device having the above-mentioned functions, and may be embodied, for example, by a system in which a plurality of devices are combined and are connected to communicate with each other. The device asset management apparatus 1 may be embodied as a part of the functions of the maintenance device 3, the operation control device 4, the manufacturing execution system 5, or the basic business system 6 which have described above with reference to FIG. 8.

A device asset management method according to this embodiment includes an operating asset state storing step of storing an operating asset state in which an asset state of a field device is represented as an operating state, an inventory asset state storing step of storing an inventory asset state in which the asset state is represented as an inventory state, an asset state changing step of changing at least one of the operating asset state and the inventory asset state based on at least one of information of a maintenance operation performed on the field device and information on warehousing and releasing of the field device, and an asset state displaying step of displaying the operating asset state and the inventory asset state, and thus can easily perform asset management of the field device.

The execution order of the steps in the device asset management method according to this embodiment is not limited to the order of the steps which have been described above, but the steps may be executed in an arbitrary order.

The various processes in the embodiment mentioned above may be performed by recording a program for realizing the functions constituting the device described in the embodiment on a computer-readable recording medium and causing a computer system to read and execute the program recorded on the recording medium. The "computer system" mentioned herein may include an operating system (OS) or hardware such as peripherals. The "computer system" includes a homepage providing environment (or a homepage display environment) when a WWW system is used. Examples of the "computer-readable recording medium" include a flexible disk, a magneto-optical disc, a ROM, a portable medium such as a flash memory, a portable medium such as a CD-ROM, and a storage device such as a hard disk built in the computer system.

The "computer-readable recording medium" may include a medium that holds a program for a predetermined time like a volatile memory (for example, a dynamic random access memory (RAM)) in a computer system serving as a server or a client when a program is transmitted via a network such as the Internet or a communication line such as a telephone circuit. The program may be transmitted from a computer system storing the program in a storage device or the like to another computer system via a transmission medium or carrier waves in the transmission medium. Here, the "transmission medium" for transmitting the program means a medium having a function of transmitting information like a network (a communication network) such as the Internet or a communication circuit (a communication line) such as a telephone circuit. The program may serve to realize some of the above-mentioned functions. The program may be a so-called differential file (differential program) which realizes the above-mentioned functions in combination with another program stored in the computer system.

As used herein, the following directional terms "front, back, above, downward, right, left, vertical, horizontal, below, transverse, row and column" as well as any other similar directional terms refer to those instructions of a device equipped with the present invention. Accordingly, these terms, as utilized to describe the present invention should be interpreted relative to a device equipped with the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

## Claims

1. A device asset management apparatus (1) comprising:
an operating asset state storage (113) configured to store an operating asset state representing an asset state of a field device (2) as an operating state;
an inventory asset state storage (125) configured to store an inventory asset state representing the asset state as an inventory state;
an asset state changer (131) which is implemented by a processor (101), and configured to change the operating asset state and the inventory asset state; and
an asset state display (132) configured to display the operating asset state and the inventory asset state,
**characterized in that**
the operating asset state comprises an asset ID for identifying the field device (2), a first state-change-date indicating a date on which the operating asset state changed, and a first state indicating a state of the field device (2),
the inventory asset state comprises the asset ID, a second state-change-date indicating a date on which the inventory asset state changed, and a second state indicating a state of the field device (2),
the asset state changer (131) is further configured to store, into the operating asset state storage (113), a history of the first state-change-date and the first state included in the operating asset state based on information on a maintenance operation performed to the field device (2), and
the asset state changer (131) is further configured to store, into the inventory asset state storage (125), a history of the second state-change-date and the second state included in the inventory asset state based on information on warehousing and releasing of the field device (2).

2. The device asset management apparatus (1) according to claim 1,
wherein the asset state display (132) is further configured to display the operating asset state and the inventory asset state in a state transition diagram.

3. The device asset management apparatus (1) according to claim 1 or 2, further comprising:
a mismatch detector (133) configured to detect a mismatch between the operating asset state and the inventory asset state.

4. The device asset management apparatus (1) according to any one of claims 1 to 3, further comprising:
an asset state predictor (134) configured to predict a change of the operating asset state or the inventory asset state.

5. The device asset management apparatus (1) according to claim 4,
wherein the asset state predictor (134) is further configured to predict the change based on state change prediction information in which a type of the field device (2) and an event which is a reason for occurrence of the change are associated with each other.

6. The device asset management apparatus (1) according to claim 5,
wherein the state change prediction information comprises information on a time until the operating asset state changes and information on a probability that the operating asset state changes during the time.

7. The device asset management apparatus (1) according to any one of claims 1 to 6,
wherein the operating asset state storage (113) is further configured to store the operating asset state as at least one of a healthy state in which the field device (2) operates normally, an unhealthy state in which the field device (2) does not operate normally, and a calibration-required state in which a calibration of the field device (2) is required, and
wherein the inventory asset state storage (125) is further configured to store the inventory asset state as at least one of an inventory state in which the field device (2) is releasable and stored, and a discard state in which the field device (2) has been discarded.

8. The device asset management apparatus (1) according to claim 7,
wherein the asset state changer (131) is further configured to change the asset state from the inventory state to the healthy state when the field device (2) is installed in a plant.

9. The device asset management apparatus (1) according to claim 7 or 8,
wherein the asset state changer (131) is further configured to change the asset state from the healthy state to the calibration-required state when a calibration cycle of the field device (2) elapses.

10. The device asset management apparatus (1) according to any one of claims 7 to 9,
wherein the asset state changer (131) is further configured to:
change the asset state from the calibration-required state to the healthy state when the calibration of the field device (2) succeeds, and
change the asset state from the calibration-required state to the discard state when the calibration of the field device (2) fails.

11. A device asset management method performed by an apparatus (1), the method comprising the steps of:
storing, into an operating asset state storage (113) of the apparatus (1), an operating asset state representing an asset state of a field device (2) as an operating state;
storing, into an inventory asset state storage (125) of the apparatus (1), an inventory asset state representing the asset state as an inventory state;
changing, by an asset state changer (131) of the apparatus (1), the operating asset state and the inventory asset state, the asset state changer (131) being implemented by a processor (101); and
displaying, by an asset state display (132) of the apparatus (1), the operating asset state and the inventory asset state,
the device asset management method **characterized in that**
the operating asset state comprises an asset ID for identifying the field device (2), a first state-change-date indicating a date on which the operating asset state changed, and a first state indicating a state of the field device (2),
the inventory asset state comprises the asset ID, a second state-change-date indicating a date on which the inventory asset state changed, and a second state indicating a state of the field device (2),
the device asset management method further comprises the steps of:
storing, by the asset state changer (131), into the operating asset state storage (113), a history of the first state-change-date and the first state included in the operating asset state based on information on a maintenance operation performed to the field device (2), and
storing, by the asset state changer (131), into the inventory asset state storage (125), a history of the second state-change-date and the second state included in the inventory asset state based on information on warehousing and releasing of the field device (2).

12. The device asset management method according to claim 11, further comprising the step of:
displaying, by the asset state display (132), the operating asset state and the inventory asset state in a state transition diagram.

13. The device asset management method according to claim 11 or 12, further comprising the step of:
detecting, by a mismatch detector (133), a mismatch between the operating asset state and the inventory asset state.

14. A device asset management computer program comprising instructions which, when the program is executed by a computer, cause the computer to carry out all the steps of the method according to claim 11.

15. A non-transitory computer readable storage medium comprising instructions which, when executed by a computer, cause the computer to carry out all the steps of the method according to claim 11.

## Patentansprüche

1. Eine Vorrichtungsanlagenverwaltungsvorrichtung (1), aufweisend:
einen Betriebsanlagenzustandsspeicher (113), der konfiguriert ist, um einen Betriebsanlagenzustand, der einen Anlagenzustand einer Feldvorrichtung (2) darstellt, als einen Betriebszustand zu speichern;
einen Inventaranlagenzustandsspeicher (125), der konfiguriert ist, um einen Inventaranlagenzustand, der den Anlagenzustand darstellt, als einen Inventarzustand zu speichern;
einen Anlagenzustandswechsler (131), der durch einen Prozessor (101) implementiert und konfiguriert ist, um den Betriebsanlagenzustand und den Inventaranlagenzustand zu ändern; und
eine Anlagenzustandsanzeige (132), die konfiguriert ist, um den Betriebsanlagenzustand und den Inventaranlagenzustand anzuzeigen,
**dadurch gekennzeichnet, dass**
der Betriebsanlagenzustand eine Anlagen-ID zum Identifizieren der Feldvorrichtung (2), ein erstes Zustandsänderungsdatum, das ein Datum angibt, an dem der Betriebsanlagenzustand geändert wurde, und einen ersten Zustand, der einen Zustand der Feldvorrichtung (2) angibt, aufweist,
der Inventaranlagenzustand die Anlagen-ID, ein zweites Zustandsänderungsdatum, das ein Datum angibt, an dem sich der Inventaranlagenzustand geändert hat, und einen zweiten Zustand, der einen Zustand der Feldvorrichtung (2) angibt, aufweist,
der Anlagenzustandswechsler (131) ferner konfiguriert ist, um in dem Betriebsanlagenzustandsspeicher (113) eine Historie des ersten Zustandsänderungsdatums und des ersten Zustands, die in dem Betriebsanlagenzustand umfasst sind, basierend auf Informationen über einen an der Feldvorrichtung (2) durchgeführten Wartungsbetrieb zu speichern, und
der Anlagenzustandswechsler (131) ferner konfiguriert ist, um in dem Inventaranlagenzustandsspeicher (125) eine Historie des zweiten Zustandsänderungsdatums und des zweiten Zustands, die in dem Inventaranlagenzustand umfasst sind, basierend auf Informationen über die Lagerung und Freigabe der Feldvorrichtung (2) zu speichern.

2. Die Vorrichtungsanlagenverwaltungsvorrichtung (1) nach Anspruch 1,
wobei die Vorrichtungszustandsanzeige (132) ferner konfiguriert ist, um den Betriebsanlagenzustand und den Inventaranlagenzustand in einem Zustandsübergangsdiagramm anzuzeigen.

3. Die Vorrichtungsanlagenverwaltungsvorrichtung (1) nach Anspruch 1 oder 2, ferner aufweisend:
einen Fehlanpassungsdetektor (133), der konfiguriert ist, um eine Fehlanpassung zwischen dem Betriebsanlagenzustand und dem Inventaranlagenzustand zu erfassen.

4. Die Vorrichtungsanlagenverwaltungsvorrichtung (1) nach einem der Ansprüche 1 bis 3, ferner aufweisend:
einen Anlagenzustandsvorhersager (134), der konfiguriert ist, um eine Änderung des Betriebsanlagenzustands oder des Inventaranlagenzustands vorherzusagen.

5. Die Vorrichtungsanlagenverwaltungsvorrichtung (1) nach Anspruch 4,
wobei der Anlagenzustandsvorhersager (134) ferner konfiguriert ist, um die Änderung basierend auf Zustandsänderungs-Vorhersageinformationen vorherzusagen, in denen ein Typ der Feldvorrichtung (2) und ein Ereignis, das ein Grund für das Auftreten der Änderung ist, einander zugeordnet sind.

6. Die Vorrichtungsanlagenverwaltungsvorrichtung (1) nach Anspruch 5,
wobei die Zustandsänderungs-Vorhersageinformationen Informationen über eine Zeit, bis sich der Betriebsanlagenzustand ändert, und Informationen über eine Wahrscheinlichkeit, dass sich der Betriebsanlagenzustand während der Zeit ändert, aufweist.

7. Die Vorrichtungsanlagenverwaltungsvorrichtung (1) nach einem der Ansprüche 1 bis 6,
wobei der Betriebsanlagenzustandsspeicher (113) ferner konfiguriert ist, um den Betriebsanlagenzustand als mindestens einen von einem gesunden Zustand, in dem die Feldvorrichtung (2) normal arbeitet, einem ungesunden Zustand, in dem die Feldvorrichtung (2) nicht normal arbeitet, und einem kalibrierungserforderlichen Zustand, in dem eine Kalibrierung der Feldvorrichtung (2) erforderlich ist, zu speichern, und
wobei der Inventaranlagenzustandsspeicher (125) ferner konfiguriert ist, um den Inventaranlagenzustand als mindestens einen von einem Inventarzustand, in dem die Feldvorrichtung (2) freigebbar und gespeichert ist, und einem Ausrangierzustand, in dem die Feldvorrichtung (2) ausrangiert wurde, zu speichern.

8. Die Vorrichtungsanlagenverwaltungsvorrichtung (1) nach Anspruch 7,
wobei der Anlagenzustandswechsler (131) ferner konfiguriert ist, um den Anlagenzustand von dem Inventarzustand in den gesunden Zustand zu ändern, wenn die Feldvorrichtung (2) in einer Anlage installiert wird.

9. Die Vorrichtungsanlagenverwaltungsvorrichtung (1) nach Anspruch 7 oder 8,
wobei der Anlagenzustandswechsler (131) ferner konfiguriert ist, um den Anlagenzustand von dem gesunden Zustand in den kalibrierungserforderlichen Zustand zu ändern, wenn ein Kalibrierungszyklus der Feldvorrichtung (2) abläuft.

10. Die Vorrichtungsanlagenverwaltungsvorrichtung (1) nach einem der Ansprüche 7 bis 9,
wobei der Anlagenzustandswechsler (131) ferner konfiguriert ist, um:
den Anlagenzustand von dem kalibrierungserforderlichen Zustand in den gesunden Zustand zu ändern, wenn die Kalibrierung der Feldvorrichtung (2) erfolgreich ist, und
den Anlagenzustand von dem kalibrierungserforderlichen Zustand in den Ausrangierzustand zu ändern, wenn die Kalibrierung der Feldvorrichtung (2) fehlschlägt.

11. Ein Vorrichtungsanlagenverwaltungsverfahren, das von einer Vorrichtung (1) durchgeführt wird, wobei das Verfahren die folgenden Schritte aufweist:
Speichern, in einen Betriebsanlagenzustandsspeicher (113) der Vorrichtung (1), eines Betriebsanlagenzustands, der einen Anlagenzustand einer Feldvorrichtung (2) darstellt, als einen Betriebszustand;
Speichern, in einen Inventaranlagenzustandsspeicher (125) der Vorrichtung (1), eines Inventaranlagenzustands, der den Anlagenzustand als einen Inventarzustand darstellt;
Ändern des Betriebsanlagenzustands und des Inventaranlagenzustands durch einen Anlagenzustandswechsler (131) der Vorrichtung (1), wobei der Anlagenzustandswechsler (131) durch einen Prozessor (101) implementiert ist; und
Anzeigen des Betriebsanlagenzustands und des Inventaranlagenzustands durch eine Anlagenzustandsanzeige (132) der Vorrichtung (1),
wobei das Vorrichtungsanlagenverwaltungsverfahren
**dadurch gekennzeichnet ist, dass**
der Betriebsanlagenzustand eine Anlagen-ID zum Identifizieren der Feldvorrichtung (2), ein erstes Zustandsänderungsdatum, das ein Datum angibt, an dem sich der Betriebsanlagenzustand geändert hat, und einen ersten Zustand, der einen Zustand der Feldvorrichtung (2) angibt, aufweist,
der Inventaranlagenzustand die Anlagen-ID, ein zweites Zustandsänderungsdatum, das ein Datum angibt, an dem sich der Inventaranlagenzustand geändert hat, und einen zweiten Zustand, der einen Zustand der Feldvorrichtung (2) angibt, aufweist,
das Vorrichtungsanlagenverwaltungsverfahren ferner die folgenden Schritte aufweist:
Speichern einer Historie des ersten Zustandsänderungsdatums und des ersten Zustands, die in dem Betriebsanlagenzustand umfasst sind, durch den Anlagenzustandswechsler (131) in den Betriebsanlagenzustandsspeicher (113), basierend auf Informationen über eine an der Feldvorrichtung (2) durchgeführte Wartungsarbeit, und
Speichern einer Historie des zweiten Zustandsänderungsdatums und des zweiten Zustands, die in dem Inventaranlagenzustand umfasst sind, durch den Anlagenzustandswechsler (131) in den Inventaranlagenzustandsspeicher (125), basierend auf Informationen über die Lagerung und Freigabe der Feldvorrichtung (2).

12. Das Vorrichtungsanlagenverwaltungsverfahren nach Anspruch 11, das ferner den folgenden Schritt aufweist:
Anzeigen des Betriebsanlagenzustands und des Inventaranlagenzustands in einem Zustandsübergangsdiagramm durch die Anlagenzustandsanzeige (132).

13. Das Vorrichtungsanlagenverwaltungsverfahren nach Anspruch 11 oder 12, das ferner den folgenden Schritt aufweist:
Erfassen, durch einen Fehlanpassungsdetektor (133), einer Fehlanpassung zwischen dem Betriebsanlagenzustand und dem Inventaranlagenzustand.

14. Ein Vorrichtungsanlagenverwaltungs-Computerprogramm mit Anweisungen, die, wenn das Programm von einem Computer ausgeführt wird, den Computer veranlassen, alle Schritte des Verfahrens nach Anspruch 11 auszuführen.

15. Ein nicht-transitorisches computerlesbares Speichermedium mit Anweisungen, die, wenn sie von einem Computer ausgeführt werden, den Computer veranlassen, alle Schritte des Verfahrens nach Anspruch 11 auszuführen.

## Revendications

1. Appareil (1) de gestion d'actif de dispositif comprenant :
un dispositif de stockage d'état d'actif de fonctionnement (113) configuré pour stocker un état d'actif de fonctionnement représentant un état d'actif d'un dispositif de terrain (2) en tant qu'état de fonctionnement ;
un dispositif de stockage d'état d'actif d'inventaire (125) configuré pour stocker un état d'actif d'inventaire représentant l'état d'actif en tant qu'état d'inventaire ;
un dispositif de changement d'état d'actif (131) qui est mis en œuvre par un processeur (101), et configuré pour changer l'état d'actif de fonctionnement et l'état d'actif d'inventaire ; et
un afficheur d'état d'actif (132) configuré pour afficher l'état d'actif de fonctionnement et l'état d'actif d'inventaire,
**caractérisé en ce que**
l'état d'actif de fonctionnement comprend un ID (identifiant) d'actif pour identifier le dispositif de terrain (2), une première date de changement d'état indiquant une date à laquelle l'état d'actif de fonctionnement a changé, et un premier état indiquant un état du dispositif de terrain (2),
l'état d'actif d'inventaire comprend l'ID d'actif, une deuxième date de changement d'état indiquant une date à laquelle l'état d'actif d'inventaire a changé, et un deuxième état indiquant un état du dispositif de terrain (2),
le dispositif de changement d'état d'actif (131) est en outre configuré pour stocker, dans le dispositif de stockage d'état d'actif de fonctionnement (113), un historique de la première date de changement d'état et du premier état compris dans l'état d'actif de fonctionnement, sur la base d'informations sur une opération de maintenance réalisée sur le dispositif de terrain (2), et
le dispositif de changement d'état d'actif (131) est en outre configuré pour stocker, dans le dispositif de stockage d'état d'actif d'inventaire (125), un historique de la deuxième date de changement d'état et du deuxième état compris dans l'état d'actif d'inventaire sur la base d'informations sur un entreposage et un déstockage du dispositif de terrain (2).

2. Appareil (1) de gestion d'actif de dispositif selon la revendication 1,
dans lequel l'afficheur d'état d'actif (132) est en outre configuré pour afficher l'état d'actif de fonctionnement et l'état d'actif d'inventaire dans un schéma de transition d'état.

3. Appareil (1) de gestion d'actif de dispositif selon la revendication 1 ou 2, comprenant en outre :
un détecteur de non-concordance (133) configuré pour détecter une non-concordance entre l'état d'actif de fonctionnement et l'état d'actif d'inventaire.

4. Appareil (1) de gestion d'actif de dispositif selon l'une des revendications 1 à 3, comprenant en outre :
un prédicteur d'état d'actif (134) configuré pour prédire un changement de l'état d'actif de fonctionnement ou de l'état d'actif d'inventaire.

5. Appareil (1) de gestion d'actif de dispositif selon la revendication 4,
dans lequel le prédicteur d'état d'actif (134) est en outre configuré pour prédire le changement sur la base d'informations de prédiction de changement d'état dans lesquelles un type du dispositif de terrain (2) et un événement qui est une raison de l'occurrence du changement sont associés l'un à l'autre.

6. Appareil (1) de gestion d'actif de dispositif selon la revendication 5,
dans lequel les informations de prédiction de changement d'état comprennent des informations sur un temps jusqu'à ce que l'état d'actif de fonctionnement change, et des informations sur une probabilité que l'état d'actif de fonctionnement change pendant ce temps.

7. Appareil (1) de gestion d'actif de dispositif selon l'une des revendications 1 à 6,
dans lequel le dispositif de stockage d'état d'actif de fonctionnement (113) est en outre configuré pour stocker l'état d'actif de fonctionnement en tant qu'au moins l'un parmi un état sain, dans lequel le dispositif de terrain (2) fonctionne normalement, un état malsain dans lequel le dispositif de terrain (2) ne fonctionne pas normalement, et un état d'étalonnage requis dans lequel un étalonnage du dispositif de terrain (2) est requis, et
dans lequel le dispositif de stockage d'état d'actif d'inventaire (125) est en outre configuré pour stocker l'état d'actif d'inventaire en tant qu'au moins l'un parmi un état d'inventaire dans lequel le dispositif de terrain (2) est déstockable et stocké, et un état de mise au rebut dans lequel le dispositif de terrain (2) a été mis au rebut.

8. Appareil (1) de gestion d'actif de dispositif selon la revendication 7,
dans lequel le dispositif de changement d'état d'actif (131) est en outre configuré pour changer l'état d'actif de l'état d'inventaire à l'état sain lorsque le dispositif de terrain (2) est installé dans une usine.

9. Appareil (1) de gestion d'actif de dispositif selon la revendication 7 ou 8,
dans lequel le dispositif de changement d'état d'actif (131) est en outre configuré pour changer l'état d'actif de l'état sain à l'état d'étalonnage requis lorsqu'un cycle d'étalonnage du dispositif de terrain (2) s'est écoulé.

10. Appareil (1) de gestion d'actif de dispositif selon l'une des revendications 7 à 9,
dans lequel le dispositif de changement d'état d'actif (131) est en outre configuré pour :
changer l'état d'actif de l'état d'étalonnage requis à l'état sain lorsque l'étalonnage du dispositif de terrain (2) réussit, et
changer l'état d'actif de l'état d'étalonnage requis à l'état de mise au rebut lorsque l'étalonnage du dispositif de terrain (2) échoue.

11. Procédé de gestion d'actif de dispositif réalisée par un appareil (1), le procédé comprenant les étapes suivantes :
stocker, dans un dispositif de stockage d'état d'actif de fonctionnement (113) de l'appareil (1), un état d'actif de fonctionnement représentant un état d'actif d'un dispositif de terrain (2) en tant qu'état de fonctionnement ;
stocker, dans un dispositif de stockage d'état d'actif d'inventaire (125) de l'appareil (1), un état d'actif d'inventaire représentant l'état d'actif en tant qu'état d'inventaire ;
changer, par un dispositif de changement d'état d'actif (131) de l'appareil (1), l'état d'actif de fonctionnement et l'état d'actif d'inventaire, le dispositif de changement d'état d'actif (131) étant mis en œuvre par un processeur (101) ; et
afficher, par un afficheur d'état d'actif (132) de l'appareil (1), l'état d'actif de fonctionnement et l'état d'actif d'inventaire,
le procédé de gestion d'actif de dispositif **caractérisé en ce que**
l'état d'actif de fonctionnement comprend un ID d'actif pour identifier le dispositif de terrain (2), une première date de changement d'état indiquant une date à laquelle l'état d'actif de fonctionnement a changé, et un premier état indiquant un état du dispositif de terrain (2),
l'état d'actif d'inventaire comprend l'ID d'actif, une deuxième date de changement d'état indiquant une date à laquelle l'état d'actif d'inventaire a changé, et un deuxième état indiquant un état du dispositif de terrain (2),
le procédé de gestion d'actif de dispositif comprend en outre les étapes suivantes :
stocker, par le dispositif de changement d'état d'actif (131), dans le dispositif de stockage d'état d'actif de fonctionnement (113), un historique de la première date de changement d'état et du premier état compris dans l'état d'actif de fonctionnement sur la base d'informations sur une opération de maintenance réalisée sur le dispositif de terrain (2), et
stocker, par le dispositif de changement d'état d'actif (131), dans le dispositif de stockage d'état d'actif d'inventaire (125), un historique de la deuxième date de changement d'état et du deuxième état compris dans l'état d'actif d'inventaire sur la base d'informations sur un entreposage et une libération du dispositif de terrain (2).

12. Procédé de gestion d'actif de dispositif selon la revendication 11, comprenant en outre l'étape suivante :
afficher, par l'afficheur d'état d'actif (132), l'état d'actif de fonctionnement et l'état d'actif d'inventaire dans un schéma de transition d'état.

13. Procédé de gestion d'actif de dispositif selon la revendication 11 ou 12, comprenant en outre l'étape suivante :
détecter, par un détecteur de non-concordance (133), une non-concordance entre l'état d'actif de fonctionnement et l'état d'actif d'inventaire.

14. Programme informatique de gestion d'actif de dispositif comprenant des instructions qui, lorsque le programme est exécuté par un ordinateur, amènent l'ordinateur à effectuer toutes les étapes du procédé selon la revendication 11.

15. Support de stockage non transitoire lisible par ordinateur comprenant des instructions qui, lorsqu'elles sont exécutées par un ordinateur, amènent l'ordinateur à effectuer toutes les étapes du procédé selon la revendication 11.
